(19) Europäisches Patentamt
European Patent Office
Office européen des brevets

(11) EP 2 655 251 B1

(12) # FASCICULE DE BREVET EUROPEEN

(45) Date de publication et mention de la délivrance du brevet:
**02.08.2017 Bulletin 2017/31**

(21) Numéro de dépôt: **11805515.1**

(22) Date de dépôt: **22.12.2011**

(51) Int Cl.:
***C01B 32/158*** *(2017.01)* ***C01B 33/20*** *(2006.01)*
***C01B 33/22*** *(2006.01)* ***C01B 33/38*** *(2006.01)*

(86) Numéro de dépôt international:
**PCT/EP2011/073862**

(87) Numéro de publication internationale:
**WO 2012/085239 (28.06.2012 Gazette 2012/26)**

(54) **PROCÉDÉ DE PRÉPARATION D'UNE COMPOSITION COMPRENANT DES PARTICULES MINÉRALES SYNTHÉTIQUES**

VERFAHREN ZUR HERSTELLUNG EINER ZUSAMMENSETZUNG MIT SYNTHETISCHEN ANORGANISCHEN TEILCHEN

METHOD FOR PREPARING A COMPOSITION INCLUDING SYNTHETIC INORGANIC PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1005096**

(43) Date de publication de la demande:
**30.10.2013 Bulletin 2013/44**

(73) Titulaires:
- **Université Paul Sabatier Toulouse III**
  **31062 Toulouse Cedex 9 (FR)**
- **Centre National de la Recherche Scientifique (C.N.R.S.)**
  **75794 Paris Cedex 16 (FR)**

(72) Inventeurs:
- **LE ROUX, Christophe**
  **F-31290 Avignonet Lauragais (FR)**
- **MARTIN, François**
  **F-31570 Sainte Foy D'aigrefeuille (FR)**
- **MICOUD, Pierre**
  **F-31820 Pibrac (FR)**
- **DUMAS, Angela**
  **F-31320 Pechabou (FR)**

(74) Mandataire: **Cabinet BARRE LAFORGUE & associés**
**35, rue Lancefoc**
**31000 Toulouse (FR)**

(56) Documents cités:
**WO-A2-2008/009800** **WO-A2-2008/009801**
**US-A- 4 626 420** **US-A1- 2001 042 704**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un procédé de préparation d'une composition comprenant des particules minérales synthétiques.

Dans tout le texte, on désigne par « particule minérale » toute particule inorganique, qui ne contient pas de carbone, ou qui n'en contient, le cas échéant, que sous forme de carbonate ou de cyanure.

Dans tout le texte, on désigne par « traitement hydrothermal » tout traitement réalisé, en présence d'eau, à une température prédéterminée et à une pression supérieure à la pression atmosphérique.

De nombreux minéraux tels que les borates ou les silicates sont utilisés dans divers domaines industriels.

Les particules minérales phyllosilicatées, telles que le talc, sont par exemple utilisées sous forme de fines particules dans de nombreux secteurs industriels, tels que : le caoutchouc, les thermoplastiques, les élastomères, le papier, la peinture, les vernis, le textile, la métallurgie, la pharmaceutique, la cosmétique, les produits phytosanitaires ou encore les engrais dans lesquels des phyllosilicates tel que le talc sont utilisés, par incorporation dans une composition, à titre de charge inerte (pour leur stabilité chimique ou encore pour la dilution de composés actifs de coût supérieur) ou de charges fonctionnelles (par exemple pour renforcer les propriétés mécaniques de certains matériaux).

Le talc naturel, qui est un silicate de magnésium hydroxylé de formule $Si_4Mg_3O_{10}(OH)_2$, appartient à la famille des phyllosilicates. Les phyllosilicates sont constitués par un empilement irrégulier de feuillets élémentaires de structure cristalline, dont le nombre varie de quelques unités à quelques dizaines d'unités. Parmi les phyllosilicates (silicates lamellaires), le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. Ce groupe correspond aux phyllosilicates 2/1, dont font notamment partie les smectites. Au vu de leur structure, les phyllosilicates 2/1 sont également qualifiées de type T.O.T. (tétraèdre-octaèdre-tétraèdre).

La couche octaédrique des phyllosilicates 2/1 est formée de deux plans d'ions $O^{2-}$ et $OH^-$ (dans la proportion molaire $O^{2-}/OH^-$ de 2:1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires. Dans les smectites naturelles, par exemple, les sites tétraédriques sont généralement occupés par des ions $Si^{4+}$ ou $A1^{3+}$, et les sites octaédriques le sont le plus souvent par les cations $Mg^{2+}$, $Fe^{2+}$, $Al^{3+}$ et/ou $Fe^{3+}$. Une faible proportion des sites octaédriques et/ou tétraédriques des smectites n'est pas occupée et est responsable du déficit cationique du réseau cristallin formant les feuillets élémentaires.

En ce qui concerne le talc, pour nombre de ses applications, une pureté élevée, une grande lamellarité et une finesse des particules, ainsi qu'une distribution granulométrique et lamellaire étroite, sont recherchées car elles peuvent être déterminantes pour la qualité du produit final.

Or, la préparation d'une composition pulvérulente à partir de blocs de talc naturel, par broyage et traitement du talc ne permet pas de contrôler la pureté, la lamellarité, et la taille des particules de talc obtenues.

Dans ce contexte, WO 2008/009799 propose un procédé de préparation d'une composition talqueuse comprenant au moins un minéral synthétique silico/germano-métallique de formule $(Si_xGe_{1-x})_4M_3O_{10}(OH)_2$ par traitement hydrothermal d'un gel silico/germano-métallique de formule $(Si_xGe_{1-x})_4M_3O_{11}$, $n'H_2O$ , à l'état liquide pendant une durée allant de 3 jours à 30 jours et à une température comprise entre 300°C et 600°C. Dans un procédé selon WO 2008/009799, un traitement hydrothermal d'une durée de 3 jours à 300 °C est nécessaire pour pouvoir obtenir des particules de talc synthétique présentant une granulométrie variant entre 20 nm et 100 nm ou encore un traitement hydrothermal d'une durée de 30 jours à 600°C pour obtenir des particules de talc synthétique présentant une granulométrie de l'ordre de 6 μm, la durée du traitement hydrothermal devant être suffisamment importante pour permettre l'obtention de particules de cristallinité et de stabilité thermique satisfaisantes.

US 2001/0042704 décrit un procédé de synthèse de phyllosilicates par traitement hydrothermal à 220°C pendant 48 heures d'un hydrogel obtenu par ajout successif dans l'eau, d'acide fluorhydrique, d'acétate de magnésium et de silice.

Ainsi, un procédé selon WO 2008/009799 ou selon US 2001/0042704, bien que permettant la préparation d'un minéral synthétique similaire au talc et dont la pureté peut être contrôlée, reste difficilement compatible avec des exigences industrielles élevées, en termes de rendement, d'efficacité et de rentabilité.

L'invention vise à proposer un procédé amélioré de préparation d'une composition comprenant des particules minérales synthétiques.

L'invention vise à proposer un procédé amélioré de préparation d'une composition comprenant des particules minérales synthétiques silicatées.

L'invention vise à proposer un procédé amélioré de préparation d'une composition, dite composition talqueuse, comprenant des particules minérales phyllosilicatées présentant au moins une phase non gonflante.

L'invention vise à proposer un procédé de préparation d'une composition talqueuse par un traitement hydrothermal d'un gel silico/germano-métallique dont la durée est considérablement réduite par rapport à la durée d'un traitement hydrothermal nécessaire dans un procédé de préparation d'une composition talqueuse décrit dans l'état de la technique.

L'invention vise également à proposer un procédé de préparation d'une composition comprenant des particules minérales synthétiques dans lequel on effectue un traitement hydrothermal d'un hydrogel précurseur desdites particules minérales synthétiques à une température réduite et/ou pendant une durée réduite.

L'invention vise également à proposer un procédé de préparation d'une composition talqueuse dans lequel on effectue un traitement hydrothermal d'un gel silico/germano-métallique à une température réduite et/ou pendant une durée réduite et permettant d'obtenir une composition talqueuse comprenant des particules phyllosilicatées présentant des propriétés améliorées.

L'invention vise à proposer un tel procédé dont la mise en oeuvre est simple et rapide, et est compatible avec les contraintes d'une exploitation industrielle.

La présente invention a aussi pour objectif de proposer un procédé de préparation d'une composition comprenant des particules minérales synthétiques pouvant être utilisée en remplacement de telles compositions naturelles, dans diverses de leurs applications.

La présente invention a aussi pour objectif de proposer un procédé de préparation de compositions talqueuses pouvant être utilisées en remplacement de compositions de talc naturel, dans diverses de leurs applications.

L'invention vise à proposer un procédé de préparation de compositions talqueuses de grande pureté minéralogique et cristallochimique, comprenant des particules minérales synthétiques ayant une lamellarité et une granulométrie fine et de faible dispersion, et une structure cristalline thermiquement stable.

Pour ce faire, l'invention concerne un procédé selon la revendication 1.

En effet, les inventeurs ont constaté avec surprise qu'un procédé selon l'invention, dans lequel, dans une première étape, on prépare un hydrogel précurseur des particules minérales synthétiques et, dans une deuxième étape, on réalise un traitement hydrothermal de l'hydrogel en ajoutant au moins un sel carboxylate de formule R-COOM' tel que défini précédemment, permet de préparer une composition comprenant des particules minérales synthétiques en réduisant considérablement la durée et/ou la température dudit traitement hydrothermal.

Avantageusement et selon l'invention, dans la formule R-COOM' du sel carboxylate, R est choisi parmi H et les groupements alkyle comprenant moins de 10 atomes de carbone et en particulier parmi un hydrogène H-, un méthyle $CH_3$- et un n-propyle $CH_3$-$CH_2$-$CH_2$-. Ainsi, avantageusement et selon l'invention, on choisit R dans le groupe formé de H-, $CH_3$- et $CH_3$-$CH_2$-$CH_2$-.

Avantageusement et selon l'invention, lesdites particules minérales synthétiques sont des particules minérales silicatées, c'est-à-dire des particules appartenant à la famille des silicates dont la structure comprend des groupements [$SiO_4$] tétraédriques. En particulier, avantageusement et selon l'invention, lesdites particules minérales synthétiques sont des particules minérales phyllosilicatées, c'est-à-dire des particules appartenant à la famille des silicates lamellaires, dont font par exemple partie les micas et le talc.

Dans un mode de réalisation particulièrement avantageux d'un procédé selon l'invention, ledit hydrogel précurseur desdites particules minérales synthétiques est un gel silico/germano-métallique de formule $(Si_xGe_{1-x})_4M_3O_{11}$, n'$H_2O$ :

- M désignant au moins un métal divalent ayant pour formule $Mgy_{(1)}CO_{y(2)}\,Zn_{y(3)}Cu_{y(4)}Mn_{y(5)}Fe_{y(6)}Ni_{y(7)}Cr_{y(8)}$; chaque y(i) représentant un 8 nombre réel de l'intervalle [0 ;1], et tel que $\sum_{i=1}^{8} y(i) = 1$, et
- x étant un nombre réel de l'intervalle [0 ;1],
- n' se référant à un nombre de molécule(s) d'eau associée(s) audit gel silico/germano-métallique.

Les inventeurs ont constaté de façon surprenante qu'un procédé selon l'invention comprenant une première étape de préparation d'un hydrogel précurseur formé d'un gel silico/germano-métallique de formule $(Si_xGe_{1-x})_4M_3O_{11}$, n'$H_2O$ et une deuxième étape de traitement hydrothermal du gel silico/germano-métallique en présence d'au moins un sel carboxylate de formule R-COOM', permet de préparer une composition, dite composition talqueuse, comprenant des particules minérales phyllosilicatées, en réduisant considérablement la durée et/ou la température dudit traitement hydrothermal. Aucune explication claire ne peut être donnée au résultat très surprenant obtenu par l'invention, qui permet notamment, par simple adjonction d'un sel carboxylate de formule R-COOM' dans le milieu de traitement hydrothermal, une augmentation considérable de la vitesse du traitement hydrothermal, de la même façon qu'un catalyseur. La présence d'au moins un sel carboxylate de formule R-COOM' dans le milieu de traitement hydrothermal, pendant le traitement hydrothermal dudit gel silico/germano-métallique, semble avoir un rôle très important sur la germination et la croissance desdites particules minérales phyllosilicatées, notamment grâce à son influence sur le pH du milieu de traitement hydrothermal, et ce tout au long du traitement hydrothermal.

Avantageusement et selon l'invention, le(s) sel(s) carboxylate(s) de formule R-COOM' est(sont) ajouté(s) audit milieu de traitement de façon à présenter, par rapport audit hydrogel précurseur desdites particules minérales synthétiques, un rapport molaire R-COOM'/hydrogel compris entre 0,4 et 100. Il s'agit du rapport molaire entre la quantité de sel(s) carboxylate(s) et la quantité d'hydrogel dans le milieu de traitement au début du traitement hydrothermal. Ce rapport R-COOM'/hydrogel peut notamment être compris entre 1,8 et 100, en particulier entre 7,2 et 90 et par exemple entre 40 et 90.

Dans un cas où on prépare des particules minérales silicatées, avantageusement et selon l'invention, le(s) sel(s) carboxylate(s) de formule R-COOM' est(sont) ajouté(s) audit milieu de traitement de façon à présenter, par rapport au silicium, un rapport molaire R-COOM'/Si compris entre 0,1 et 25. Il s'agit du rapport molaire entre la quantité de sel(s) carboxylate(s) et la quantité d'atomes de silicium dans le milieu de traitement au début du traitement hydrothermal. Ce rapport R-COOM'/Si peut notamment être compris entre 0,45 et 25, en particulier entre 1,8 et 22,5 et par exemple entre 10 et 22,5.

Au moins une étape du traitement hydrothermal est réalisée en ajoutant au moins un sel carboxylate de formule R-COOM' au milieu de traitement. Le(s) sel(s) carboxylate(s) de formule R-COOM' peuvent être ajoutés dans le milieu de traitement hydrothermal à tout moment du traitement hydrothermal, par exemple dès le début ou, éventuellement, après une première étape de pré-traitement hydrothermal par exemple. Avantageusement et selon l'invention, on ajoute le(s) sel(s) carboxylate(s) de formule R-COOM' audit milieu de traitement au début dudit traitement hydrothermal.

Avantageusement et selon l'invention, on ajoute le(s) sel(s) carboxylate(s) de formule R-COOM' audit milieu de traitement de façon à ajuster son pH à une valeur comprise entre 8 et 12. Avantageusement et selon l'invention, on réalise ledit traitement hydrothermal à une température comprise entre 150°C et 600°C. La présence d'au moins un sel carboxylate de formule R-COOM' dans le milieu de traitement hydrothermal, dans une concentration (totale) comprise entre 0,2 mol/L et 10 mol/L, a apparemment notamment pour effet de maintenir le pH du milieu de traitement hydrothermal entre 8 et 12 et d'éviter une chute du pH au cours du traitement hydrothermal. Les inventeurs ont en effet constaté avec surprise que la présence d'au moins un sel carboxylate de formule R-COOM' dans le milieu de traitement hydrothermal, pendant le traitement hydrothermal du gel silico/germano-métallique permet de maintenir le pH dudit milieu entre 8 et 12. Cet effet sur le pH est différent d'un effet tampon. Dans le cas où on utilise l'acétate de sodium, le pH mesuré au cours du traitement hydrothermal est par exemple de 9,47 alors que le pKa du couple acide acétique/ion acétate est de 4,8.

La concentration en sel(s) carboxylate(s) dans le milieu de traitement hydrothermal, est adaptée pour permettre l'obtention d'une composition comprenant des particules minérales synthétiques, après une durée de traitement hydrothermal réduite. Avantageusement et selon l'invention, on ajoute le(s) sel(s) carboxylate(s) de formule R-COOM' audit milieu de traitement de façon que la concentration en sel(s) carboxylate(s) de formule R-COOM' dans le milieu de traitement soit comprise entre 0,2 mol/L et 10 mol/L.

Avantageusement et selon l'invention, on réalise ledit traitement hydrothermal à une température comprise entre 150°C et 600°C, en particulier entre 200°C et 400°C. Ainsi, la réalisation dudit traitement hydrothermal à une température comprise entre 150°C et 600°C, et en particulier entre 200°C et 400°C, en présence d'au moins un sel carboxylate de formule R-COOM' tel que défini précédemment, permet d'obtenir une composition comprenant des particules minérales synthétiques. En outre, grâce à la présence d'au moins un tel sel carboxylate, une température de traitement hydrothermal comprise entre 250°C et 350°C, par exemple une température de 300°C, suffit pour obtenir une composition, dite composition talqueuse, comprenant des particules minérales phyllosilicatées présentant au moins une phase non gonflante. En limitant la consommation en énergie nécessaire à sa réalisation, un procédé de préparation d'une composition talqueuse selon l'invention est donc plus respectueux de l'environnement (procédé basses températures) qu'un procédé de préparation d'une composition talqueuse appartenant à l'état de la technique.

Avantageusement et selon l'invention, la durée du traitement hydrothermal est adaptée pour permettre l'obtention desdites particules minérales synthétiques, en fonction notamment de la température à laquelle est réalisé le traitement hydrothermal. Avantageusement et selon l'invention, on soumet ledit hydrogel à un traitement hydrothermal pendant une durée comprise entre 30 minutes et 45 jours, notamment entre 1 heure et 15 jours, en particulier entre 2 heures et 24 heures et plus particulièrement entre 2 heures et 12 heures.

Avantageusement et selon l'invention, on effectue le traitement hydrothermal dudit hydrogel, et en particulier dudit gel silico/germano-métallique, au moyen d'un autoclave. Il peut par exemple s'agir d'un autoclave formé d'un alliage à base de nickel tel que l'Hastelloy® (commercialisé par Haynes International, Kokomo, Etats-Unis) ou encore d'un autoclave en titane ou éventuellement en acier à chemisage intérieur en polytétrafluoroéthylène (PTFE) dans un cas où la température de traitement hydrothermal ne dépasse pas 250°C. Un tel autoclave peut présenter toute contenance, par exemple une contenance allant de 200 mL à 50 L.

Avantageusement et selon l'invention, on réalise ledit traitement hydrothermal sous agitation mécanique. A cet effet, on peut par exemple utiliser un autoclave muni d'une hélice métallique interne.

Avantageusement et selon l'invention, on réalise ledit traitement hydrothermal sous pression de vapeur saturante et sous agitation. Avantageusement et selon l'invention, on rajoute dans l'autoclave, avec ledit hydrogel, et en particulier avec ledit gel silico/germano-métallique, une quantité d'eau (de préférence de l'eau distillée) au moins suffisante pour créer, à l'intérieur de cet autoclave porté à la température de traitement, une atmosphère de vapeur saturante. Avantageusement et selon l'invention, on réalise ledit traitement hydrothermal sous pression autogène, c'est-à-dire à

une pression au moins égale à la pression de vapeur saturante de l'eau (pression à laquelle la phase vapeur est en équilibre avec la phase liquide). La pression autogène atteinte dans l'autoclave au cours du traitement hydrothermal dépend donc notamment de la température à laquelle on réalise ledit traitement hydrothermal, du volume de l'autoclave et de la quantité d'eau présente. Il est également possible de réaliser le traitement hydrothermal à une pression supérieure à la pression de vapeur saturante de l'eau ou à la pression autogène, dans le récipient dans lequel a lieu le traitement hydrothermal. Pour ce faire, on injecte un gaz chimiquement neutre vis-à-vis de la réaction hydrothermale dans l'autoclave ou le récipient dans lequel a lieu le traitement hydrothermal. Un tel gaz est choisi dans le groupe formé des gaz inertes (gaz rares), en particulier l'argon, du diazote ($N_2$), du dioxyde de carbone et de l'air (air comprimé). De cette façon, avantageusement et selon l'invention, le traitement hydrothermal est réalisé à une pression comprise entre 0,5 MPa (5 bars) et 20 MPa (200 bars).

Avantageusement et selon l'invention, on réalise le traitement hydrothermal avec un hydrogel, en particulier un gel silico/germano-métallique, liquéfié ayant un rapport liquide/solide compris entre 2 et 20, notamment entre 5 et 15 (la quantité de liquide étant exprimée en $cm^3$, et la quantité de solide, en grammes). Eventuellement, si nécessaire, on rajoute audit gel silico/germano-métallique liquéfié une quantité d'eau appropriée pour atteindre ce rapport.

Par ailleurs, avantageusement et selon l'invention, lesdites particules minérales phyllosilicatées présentent au moins une phase non gonflante formée d'un empilement de feuillets élémentaires de type phyllosilicate 2/1 et de formule chimique $(Si_xGe_{1-x})_4M_3O_{10}(OH)_2$. En particulier, dans un mode de réalisation particulièrement avantageux d'un procédé selon l'invention, ladite phase non gonflante peut être formée d'un empilement de feuillets élémentaires de type phyllosilicate 2/1 et de formule chimique $Si_4M_3O_{10}(OH)_2$, et plus particulièrement de formule chimique $Si_4Mg_3O_{10}(OH)_2$.

Ainsi, dans un mode de réalisation particulièrement avantageux d'un procédé selon l'invention, au terme d'un traitement hydrothermal d'un gel silico/germano-métallique conforme à l'invention, on obtient une composition talqueuse se présentant sous la forme d'une solution colloïdale renfermant des particules minérales phyllosilicatées présentant au moins une phase non gonflante. Ces particules minérales synthétiques, en solution dans l'eau peuvent se trouver soit dans un état plus ou moins individualisé les unes par rapport aux autres, soit sont organisées en agrégats plus ou moins grossiers formés de particules élémentaires minérales synthétiques, agrégées les unes aux autres. La granulométrie de ces particules élémentaires peut varier entre quelques dizaines de nanomètres et une dizaine de micromètres, notamment selon la température du traitement hydrothermal appliquée, choisie entre 150°C et 600°C, en particulier entre 200°C et 400°C.

Avantageusement et selon l'invention, à l'issue du traitement hydrothermal, on récupère une composition colloïdale comprenant des particules minérales synthétiques et on soumet ladite composition à une étape de séchage. Ladite composition comprenant des particules minérales synthétiques obtenue par un procédé selon l'invention peut être séchée par toute technique de séchage de poudre. Avantageusement et selon l'invention, consécutivement audit traitement hydrothermal, on sèche lesdites particules minérales synthétiques obtenues par lyophilisation. Le séchage peut également être réalisé au moyen d'une étuve, par exemple à une température de l'ordre de 60°C, pendant 12 heures à 48 heures, ou encore sous irradiation de micro-ondes.

Dans un mode de réalisation avantageux d'un procédé selon l'invention, on prépare ledit gel silico/germano-métallique par une coprécipitation selon la réaction :

$$\begin{matrix}(Na_2OSiO_2)_x \\ (Na_2OGeO_2)_{1-x}\end{matrix} + 2HCl + mH_2O + 3\begin{pmatrix} y_{(1)}(MgCl_2) + y_{(2)}(CoCl_2) + y_{(3)}(ZnCl_2) \\ + y_{(4)}(CuCl_2) + y_{(5)}(MnCl_2) + y_{(6)}(FeCl_2) \\ + y_{(7)}(NiCl_2) + y_{(8)}(CrCl_2) \end{pmatrix}$$

$$\longrightarrow [(Si_xGe_{1-x})_4M_3O_{11}, n'H_2O] + 8NaCl + (m-n'+1)H_2O$$

m, n' et (m-n'+1) étant des nombres entiers positifs.

Ledit gel silico/germano-métallique peut être préparé par une réaction de coprécipitation mettant en oeuvre au moins un chlorure métallique de formule $MCl_2$. On obtient un gel silico/germano-métallique se présentant sous la forme d'une solution colloïdale renfermant des particules de formule $(Si_xGe_{1-x})_4M_3O_{11}$, $n'H_2O$. Il est ensuite nécessaire de substituer sensiblement totalement le chlorure de sodium obtenu lors de cette coprécipitation par au moins un -notamment un et un seul- sel carboxylate de formule R-COOM', avant de procéder au traitement hydrothermal dudit gel silico/germano-métallique. Avantageusement et selon l'invention, on ajoute audit milieu de traitement au moins un sel carboxylate de formule R-COOM' en substitution équimolaire du NaCl.

Le gel silico/germano-métallique est fortement hydraté et dans la formule chimique :

$(Si_xGe_{1-x})_4M_3O_{11}$, $n'H_2O$,

n' fait référence à un nombre important de molécules d'eau associées à ce gel silico/germano-métallique et dont la valeur exacte peut être variable et n'est pas connue.

Dans un mode de réalisation particulièrement avantageux d'un procédé selon l'invention, ledit gel silico/germano-métallique a pour formule $Si_4M_3O_{11}$, $n'H_2O$. Dans ce cas, ledit gel silico/germano-métallique de formule $Si_4M_3O_{11}$, $n'H_2O$ est un gel silico-métallique.

Avantageusement et selon l'invention, consécutivement audit traitement hydrothermal, on sèche lesdites particules minérales synthétiques, notamment lesdites particules phyllosilicatées, obtenues. Avantageusement et selon l'invention, consécutivement audit traitement hydrothermal, on réalise le séchage des particules minérales synthétiques, notamment lesdites particules phyllosilicatées, obtenues par lyophilisation. Cette technique de séchage des particules minérales phyllosilicatées contenues dans une composition talqueuse obtenue par un procédé selon l'invention, permet notamment d'obtenir des particules élémentaires individualisées et d'éviter une étape de broyage desdites particules.

Une composition talqueuse, comprenant des particules minérales phyllosilicatées présentant au moins une phase non gonflante, préparée par un procédé selon l'invention présente avantageusement, en diffraction des rayons X, des pics de diffraction caractéristiques du talc, et en particulier un pic de diffraction caractéristique d'un plan (001) situé à une distance comprise entre 9,30 Å et 10,25 Å. Avantageusement et selon l'invention, ladite composition comprenant des particules minérales phyllosilicatées présente, en diffraction des rayons X, des pics de diffraction caractéristiques suivants :

- un plan (001) situé à une distance comprise entre 9,50 Å et 10,25 A ;
- un plan (020) situé à une distance comprise entre 4,50 Å et 4,61 Å ;
- un plan (003) situé à une distance comprise entre 3,10 Å et 3,20 Å ;
- un plan (060) situé à une distance comprise entre 1,50 Å et 1,55 Å.

En outre, avantageusement et selon l'invention, ladite composition talqueuse présente en outre au moins une phase gonflante.

En outre, avantageusement et selon l'invention, ladite phase gonflante est formée d'un empilement de feuillets élémentaires de type phyllosilicate 2/1 et d'au moins un espace interfoliaire entre deux feuillets élémentaires consécutifs, ladite phase gonflante ayant pour formule chimique :

$$Si_4M_{3-\varepsilon}O_{10}(OH)_2, (X^{r+})_{\varepsilon'}.nH_2O$$

- $X^{r+}$ désignant au moins un cation, dit cation interfoliaire, présent(s) dans l'(les) espace(s) interfoliaire(s) desdits feuillets élémentaires de ladite phase minérale gonflante,
- r étant un nombre réel de l'intervalle [0 ;3] et désignant une charge cationique du cation $X^{r+}$,
- $\varepsilon$ étant un nombre réel de l'intervalle [0 ;3] et désignant un déficit cationique des feuillets élémentaires de ladite phase gonflante,
- $\varepsilon'$ étant un nombre réel de l'intervalle [0 ;3] et désignant une proportion de cation(s) interfoliaire(s) $X^{r+}$ présent(s) dans l'(les) espace(s) interfoliaire(s) desdits feuillets élémentaires de ladite phase minérale gonflante, et
- n se référant à un nombre de molécule(s) d'eau associée(s) à ladite phase gonflante.

Dans la formule chimique $Si_4M_{3-\varepsilon}O_{10}(OH)_2$, $(X^{r+})_{\varepsilon'}.nH_2O$ de la phase gonflante, n fait référence à quelques molécules d'eau liées à la phase gonflante, pouvant en particulier être présentes dans l'(les) espace(s) interfoliaire(s), en association ou non avec le(s) cation(s) interfoliaire(s) $X^{r+}$.

En particulier, avantageusement et selon l'invention, ladite composition talqueuse comprend des particules minérales phyllosilicatées formées d'une interstratification entre ladite phase gonflante et ladite phase non gonflante. Une composition talqueuse comprenant des particules minérales phyllosilicatées formées d'une telle interstratification peut par exemple être obtenue suite à un traitement hydrothermal réalisé à une température comprise entre 150°C et 300°C.

Une telle composition talqueuse comprenant des particules minérales phyllosilicatées formées d'une interstratification entre une phase gonflante et une phase non gonflante peut ensuite être soumise à un traitement thermique anhydre, effectué à une pression inférieure à 5 bars (0,5 MPa), à une température comprise entre 300°C et 600°C pendant 1 à 15 heures, notamment pendant 2 à 10 heures, par exemple un traitement thermique de 4 heures à une température comprise entre 500°C et 550°C.

Ainsi, dans une variante de réalisation d'un procédé selon l'invention, consécutivement audit traitement hydrothermal, on réalise un traitement thermique anhydre à une température comprise entre 300°C et 600°C. Un tel traitement

thermique anhydre permet de convertir au moins partiellement une composition talqueuse comprenant des particules minérales phyllosilicatées formées d'une interstratification entre une phase gonflante et une phase non gonflante en une composition talqueuse comprenant des particules minérales phyllosilicatées uniquement formées d'une phase non gonflante de formule chimique $(Si_xGe_{1-x})_4M_3O_{10}(OH)_2$, et en particulier de formule chimique $Si_4M_3O_{10}(OH)_2$.

L'invention concerne aussi un procédé de préparation d'une composition, dite composition talqueuse, comprenant des particules minérales phyllosilicatées caractérisé en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent à :

- la figure 1 annexée représentant un diffractogramme correspondant à l'analyse en diffraction des rayons X effectuée sur une composition obtenue par un procédé selon l'invention, et
- la figure 2 annexée représentant un diffractogramme correspondant à l'analyse en diffraction des rayons X effectuée sur une composition obtenue par un procédé selon l'invention.

A/ - PROTOCOLE GÉNÉRAL DE PRÉPARATION D'UNE COMPOSITION COMPRENANT DES PARTICULES MINÉRALES SYNTHÉTIQUES SELON L'INVENTION

La préparation d'une composition comprenant des particules minérales synthétiques selon l'invention comprend une première étape de préparation d'un hydrogel précurseur desdites particules minérales synthétiques puis une étape de traitement hydrothermal de cet hydrogel précurseur au cours de laquelle on ajoute au moins un sel carboxylate de formule R-COOM'.

Est décrit plus particulièrement ci-après un protocole de préparation d'une composition comprenant des particules minérales phyllosilicatées, notamment des particules talqueuses.

1/ - <u>Préparation d'un gel silico/germano-métallique</u>

Le gel silico/germano-métallique peut être préparé par une réaction de coprécipitation impliquant, à titre de réactif, au moins un chlorure de métal de formule $MCl_2$. Cette réaction de coprécipitation permet d'obtenir un gel silico/germano-métallique hydraté ayant la stoechiométrie du talc (4 Si pour 3 M, M ayant pour formule $Mg_{y(1)}Co_{y(2)}Zny_{(3)}Cu_{y(4)}Mn_{y(5)}Fe_{y(6)}Ni_{y(7)}Cr_{y(8)}$).

Le gel silico/germano-métallique est préparé par une coprécipitation selon l'équation de réaction suivante :

$$4\begin{pmatrix}(Na_2OSiO_2)_x\\(Na_2OGeO_2)_{1-x}\end{pmatrix} + 2HCl + mH_2O + 3\begin{pmatrix}y_{(1)}(MgCl_2) + y_{(2)}(CoCl_2) + y_{(3)}(ZnCl_2)\\+ y_{(4)}(CuCl_2) + y_{(5)}(MnCl_2) + y_{(6)}(FeCl_2)\\+ y_{(7)}(NiCl_2) + y_{(8)}(CrCl_2)\end{pmatrix}$$

$$\rightleftharpoons [(Si_xGe_{1-x})_4M_3O_{11}, n'H_2O] + 8NaCl + (m-n'+1)H_2O$$

Cette réaction est mise en oeuvre à partir de :

1. une solution aqueuse de métasilicate de sodium penta-hydraté ou une solution aqueuse de métagermanate de sodium, ou un mélange de ces deux solutions dans les proportions molaires x:(1-x),
2. une solution de chlorure de métal, préparée avec un ou plusieurs sel(s) de métal (ou de métaux) (sous la forme de cristaux hygroscopiques) dilué(s) dans de l'eau distillée, et
3. une solution d'acide chlorhydrique 1N.

La préparation de ce gel silico/germano-métallique est réalisée en suivant le protocole suivant :

1. on mélange les solutions d'acide chlorhydrique et de chlorure de métal (ou de métaux),
2. on ajoute ce mélange à la solution de métasilicate de sodium et/ou de métagermanate de sodium ; le gel de coprécipitation se forme instantanément,
3. on récupère le gel après centrifugation (entre 3000 et 7000 tours par minute, pendant 5 à 20 minutes, par exemple 3500 tours par minute pendant 15 minutes) et élimination du surnageant (solution de chlorure de sodium formée),

4. on lave le gel avec de l'eau, en particulier avec de l'eau distillée ou osmosée, en effectuant au moins deux cycles de lavage/centrifugation,
5. on récupère le gel après centrifugation.

A l'issue de cette première phase, on obtient un gel silico/ germano-métallique $(Si_xGe_{1-x})_4M_3O_{11}$, n'$H_2O$, fortement hydraté et de consistance gélatineuse. Ce gel peut présenter un comportement thixotropique, c'est-à-dire passer d'un état visqueux à un état liquide lorsqu'on l'agite, puis retrouver son état initial après un certain temps de repos.
Le gel, fortement hydraté, récupéré après centrifugation peut être séché, par exemple dans une étuve (60°C, 2 jours), par lyophilisation, ou encore par séchage sous irradiation de micro-ondes, avant d'être soumis à un traitement hydrothermal. Le séchage du gel silico/germano-métallique $(Si_xGe_{1-x})_4M_3O_{11}$, n'$H_2O$ permet d'obtenir une poudre qui peut être stockée, et réhydratée avant utilisation pour subir un traitement hydrothermal selon l'invention.

2/ - Traitement hydrothermal du gel silico/germano-métallique

Le gel silico/germano-métallique $(Si_xGe_{1-x})_4M_3O_{11}$, n'$H_2O$ séché ou non, tel que précédemment obtenu, est soumis à un traitement hydrothermal, à une température comprise entre 150°C et 600°C, et en particulier entre 200°C et 400°C.
Pour ce faire :

1. on place le gel, préalablement séché ou sous forme liquéfiée, dans un réacteur/autoclave ;
2. on ajoute sous agitation une solution comprenant au moins un sel carboxylate de formule R-COOM' (sous une forme hydratée ou anhydre) audit gel,
3. on ajuste éventuellement le rapport liquide/solide à une valeur comprise entre 2 et 20, notamment entre 5 et 15 (la quantité de liquide étant exprimée en $cm^3$, et la quantité de solide, en grammes),
4. on place le réacteur/autoclave à l'intérieur d'une étuve, à une température de réaction prédéterminée (établie entre 150°C et 600°C), pendant toute la durée du traitement.

On peut éventuellement sécher le gel après l'ajout de la solution comprenant le(s) sel(s) carboxylate(s) de formule R-COOM' de façon à pouvoir par exemple le stocker jusqu'au moment du traitement hydrothermal. On aura alors plus qu'à mélanger le gel séché comprenant déjà le(s) sel(s) carboxylate(s) à de l'eau de façon à établir le rapport liquide/solide voulu.
Les inventeurs ont pu constater que la température du traitement hydrothermal a une influence sur la granulométrie des particules obtenues. Plus cette température est faible, plus les particules synthétisées sont petites (de l'ordre de quelques dizaines de nanomètres à 300°C, contre une dizaine de micromètres pour des températures plus élevées).
Egalement, les inventeurs ont pu noter qu'une durée relativement faible de traitement hydrothermal suffit pour permettre une conversion de la masse gélatineuse initiale en un matériau solide cristallisé et thermiquement stable.
Au cours du traitement hydrothermal, le gel silico/germano-métallique perd progressivement sa consistance gélatineuse pour adopter une structure cristalline particulaire dont la cristallinité augmente avec le temps. Cette cristallisation progressive de la matière a été constatée par des analyses en diffraction des rayons X, se traduisant sur les diffractogrammes correspondants par l'apparition rapide de pics caractéristiques qui s'affinent et s'intensifient rapidement au cours du traitement.
A l'issue de ce traitement hydrothermal, on obtient une composition talqueuse colloïdale comprenant des particules minérales phyllosilicatées en suspension dans l'eau. Au terme de ce traitement hydrothermal, le gel contenu dans le réacteur est récupéré par centrifugation (entre 3000 et 7000 tours par minute, pendant 5 à 20 minutes) puis élimination du surnageant. La solution surnageante contient le/lesdit(s) sel(s) de formule R-COOM' et peut être conservée en vue de récupérer ce/ces sel(s) carboxylate et de le/les recycler.
Le gel récupéré est ensuite de préférence lavé avec de l'eau, en particulier avec de l'eau distillée ou osmosée, en effectuant au moins deux cycles de lavage/centrifugation .
La composition solide récupérée après la dernière centrifugation peut ensuite être séchée :

- à l'étuve à 60°C, pendant 12 heures, ou encore,
- par lyophilisation, par exemple dans un lyophilisateur de type CHRIST ALPHA® 1-2 LD Plus, pendant 48 heures à 72 heures.

On obtient au final une composition solide divisée dont la couleur est fonction de la nature du ou des chlorure(s) de métal utilisé(s) pour la préparation du gel silico/germano-métallique (et également, le cas échéant, des proportions respectives de ces chlorures de métal).

Les particules minérales phyllosilicatées contenues dans une composition talqueuse obtenue par un procédé selon l'invention présentent des propriétés remarquables en termes de pureté, de cristallinité et de stabilité thermique, et ce, pour une durée de traitement hydrothermal significativement réduite par rapport à la durée de traitement hydrothermal auparavant nécessaire dans un procédé de préparation de composition talqueuse connu.

Consécutivement au traitement hydrothermal, la composition talqueuse obtenue peut éventuellement être soumise à un traitement thermique anhydre, effectué à une pression inférieure à 5 bars (0,5 MPa), à une température comprise entre 300°C et 600°C pendant 1 à 15 heures, en particulier si elle comprend des particules minérales phyllosilicatées formées d'une interstratification entre une phase gonflante et une phase non gonflante. Un tel traitement thermique anhydre peut être effectué dans un cas où l'on veut convertir une composition talqueuse comprenant des particules minérales phyllosilicatées formées d'une interstratification entre une phase gonflante et une phase non gonflante en une composition talqueuse comprenant des particules minérales phyllosilicatées uniquement formées d'une phase non gonflante.

B/ - ANALYSE ET CARACTERISATION STRUCTURELLE

Les résultats d'analyse de compositions comprenant des particules minérales synthétiques obtenues par un procédé selon l'invention sont décrits ci-après.

Les résultats d'analyse d'une composition talqueuse obtenue en suivant le protocole précédemment exposé sont ci-après rapportés. Ces résultats confirment que l'invention permet effectivement d'aboutir à la formation de particules minérales phyllosilicatées synthétiques ayant des caractéristiques structurelles (notamment lamellarité et cristallinité) très similaires à celles des talcs naturels. Ils montrent aussi que, notamment par le choix de la température et de la durée de mise en oeuvre, l'invention permet de synthétiser, de façon extrêmement simple, des particules minérales silico/germano-métalliques synthétiques, stables et pures, ayant une taille et des caractéristiques cristallines définies et prévisibles.

Les analyses ont notamment été réalisées par diffraction des rayons X et par observations en microscopie électronique. Les données recueillies sont présentées à la figure annexée et dans les exemples 1 à 11, et sont ci-après commentées.

1/ - Analyses en diffraction des rayons X

En diffraction des rayons X, le talc naturel est par exemple connu pour présenter notamment quatre pics de diffraction caractéristiques :

- pour le plan (001), un pic situé à une distance de 9,35 A ;
- pour le plan (020), un pic situé à 4,55 Å ;
- pour le plan (003), un pic situé à 3,14 Å ;
- pour le plan (060), un pic situé à 1,52 Å.

La figure 1 présente les résultats d'analyses réalisées en diffraction des rayons X sur une composition de talc synthétique, de formule $Si_4Mg_3O_{10}(OH)_2$, préparée selon la méthode précédemment décrite (avec pour cation octaédrique, $Mg^{2+}$), après précipitation d'un gel silico-métallique suivie d'une substitution du NaCl par de l'acétate de sodium à une concentration de 1 mol/L et avec un traitement hydrothermal de 300°C pendant 6 heures.

La figure 2 présente les résultats d'analyses réalisées en diffraction des rayons X sur une composition de silicate de zinc synthétique, de formule $Zn_2SiO_4$, après précipitation d'un hydrogel précurseur desdites particules de silicate de zinc, suivie d'un ajout d'acétate de sodium à une concentration de 4 mol/L et d'un traitement hydrothermal de 250°C pendant 6 heures.

Sur chacun des diffractogrammes RX des figures 1 et 2 est représentée l'intensité du signal (nombre de coups par seconde) en fonction de l'angle de diffraction $2\theta$.

En particulier, le diffractogramme représenté en figure 1 présente à des valeurs d'angle $2\theta$ de 5,72 degrés ; 10,60 degrés ; 21,65 degrés ; 22,59 degrés ; 32,90 degrés ; 40,10 degrés ; 41,97 degrés ; 71,73 degrés ; 85,40 degrés des signaux correspondant aux signaux du talc.

Les diffractogrammes RX représentés en figures 1 et 2 ont été enregistrés sur un appareil CPS 120 commercialisé par la société INEL (Artenay, France). Il s'agit d'un diffractomètre à détecteur courbe permettant une détection en temps réel sur un domaine angulaire de 120°. La tension d'accélération utilisée est de 40 kV et l'intensité de 25 mA. La relation de Bragg donnant l'équidistance structurale est : $d_{hkl}$=0,89449/sin$\theta$ (avec l'utilisation d'une anticathode au cobalt).

Cette analyse par diffraction des rayons X confirme qu'il existe une grande similitude structurelle entre les particules minérales phyllosilicatées des compositions talqueuses préparées conformément à l'invention et les particules

de talc naturel de même qu'entre les particules minérales de silicate de zinc préparées conformément à l'invention et les particules de silicate de zinc naturel.

En particulier, les pics de diffraction 3, 4 et 5 (figure 1) qui correspondent respectivement aux plans (020), (003) et (060) ont des positions qui coïncident parfaitement avec celles des pics de diffraction de référence pour le talc naturel.

En ce qui concerne les compositions talqueuses préparées, seule la position des pics de diffraction 1 et 2 du plan (001) diffère légèrement de la position du pic de référence (9,60-10,25 Å, au lieu de 9,35 Å). Cet écart de valeurs s'explique essentiellement :

- par une taille granulométrique nanométrique contrairement à celle des talcs naturels,
- par une légère hydratation résiduelle des particules minérales phyllosilicatées qui augmente la distance inter-réticulaire d(001) du fait de la présence de molécules d'eau intercalées entre les feuillets du talc et,
- éventuellement, par la nature des cations octaédriques du réseau cristallin.

Cependant, il faut noter que l'écart qui résulte de l'hydratation résiduelle diminue avec des temps de réaction légèrement plus longs et un séchage plus poussé.

Enfin, la largeur à mi-hauteur des pics des plans (001), (020), (003) et (060) témoigne de la bonne cristallinité des particules minérales silico/germano-métalliques des compositions talqueuses selon l'invention.

2/ - Observations microscopiques et appréciation de la granulométrie des particules

Compte tenu de la grande finesse des poudres que peuvent constituer les compositions talqueuses conformes à l'invention, la taille et la distribution granulométrique des particules minérales phyllosilicatées qui les composent ont été appréciées par observation en microscopie électronique à balayage et à effet de champ et en microscopie électronique en transmission.

On constate que la granulométrie des particules élémentaires varie entre 20 nm et 100 nm.

D'autre part, des mesures de la surface spécifique (aire de la surface des particules rapportée à une unité de masse) des particules minérales synthétisées, déterminées selon la méthode BET par la quantité d'argon adsorbée à la surface desdites particules de façon à former une couche monomoléculaire recouvrant complètement ladite surface (mesures selon la méthode BET, norme AFNOR X 11 - 621 et 622), ont été effectuées. On constate que la surface spécifique des particules minérales phyllosilicatées comprises dans une composition talqueuse obtenue par un procédé selon l'invention (après précipitation d'un gel silico-métallique et substitution du NaCl par de l'acétate de sodium à une concentration de 1 mol/L et traitement hydrothermal à 300°C pendant 6 heures, puis séchage par lyophilisation) est de 175 $m^2/g$.

Une telle valeur de surface spécifique, alors que la surface spécifique d'un talc naturel est de l'ordre de 20 $m^2/g$, peut notamment être révélatrice d'une très faible granulométrie, du caractère lamellaire des particules synthétisées, de l'état divisé des particules (non agglomérées) et éventuellement d'une exfoliation des feuillets élémentaires formant ladite phase non gonflante.

Les exemples 1 à 11 qui suivent illustrent le procédé de préparation selon l'invention et les caractéristiques structurales des compositions comprenant des particules minérales synthétiques, et en particulier des compositions talqueuses comprenant des particules minérales phyllosilicatées, ainsi obtenues.

EXEMPLE 1 - Préparation d'une composition comprenant des particules minérales synthétiques selon l'invention

On prépare une solution aqueuse d'acétate de sodium trihydratée $CH_3$-$COONa.3H_2O$ à une concentration de 1,3M. On disperse 2 g de gel silico-métallique préalablement séché par lyophilisation dans 27 mL de cette solution d'acétate de sodium. On place la suspension obtenue dans un réacteur en titane clos. On place le réacteur en titane dans un four à la température de 300°C pendant 6 heures.

Après refroidissement jusqu'à la température ambiante, le réacteur est ouvert et la suspension comprenant la poudre blanche est centrifugée. La solution d'acétate de sodium surnageante est récupérée et est susceptible d'être recyclée.

La pâte blanche séparée de la solution d'acétate est lavée 2 fois avec de l'eau déminéralisée puis séchée dans une étuve portée à la température de 130°C pendant 12 h. On obtient après séchage 1,13 g de solide blanc.

Sur la figure 1 est représenté le diffractogramme des rayons X de la composition de talc synthétique, de formule $Si_4Mg_3O_{10}(OH)_2$, ainsi obtenue.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,717 Å (I =100) ;

- un plan (020) situé à une distance de 4,605 Å (I =9) ;
- un plan (003) situé à une distance de 3,157 Å (I =50) ;
- un plan (060) situé à une distance de 1,525 Å (I =5).

L'intensité I des pics correspondants donnée est normalisée par rapport au pic le plus intense du diffractogramme, l'intensité du pic le plus intense étant considérée comme égale à 100.
Les pics de diffraction 2, 3, 4 et 5 représentés sur le diffractogramme de la figure 1 correspondent respectivement au plan (001), au plan (020), au plan (003) et au plan (060) identifiés ci-dessus.
Le diffractogramme des rayons X de cette composition talqueuse présente également un pic de diffraction 1 correspondant à un plan (001) situé à une distance de 17,267Å (pour I=10) représentatif d'une phase gonflante.

EXEMPLE 2 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 0,2M et on procède à un traitement hydrothermal d'un gel silico/germano-métallique (préalablement séché par lyophilisation) à une température de 300°C, pendant 6 heures.
Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,930 Å (I =100) ;
- un plan (020) situé à une distance de 4,535 Å (I =65) ;
- un plan (003) situé à une distance de 3,178 Å (I =60) ;
- un plan (060) situé à une distance de 1,521 Å (I =32).

Sur le diffractogramme des rayons X de cette composition talqueuse, le pic de diffraction correspondant au plan (001) présente un léger épaulement représentatif d'une phase gonflante présente en très faible proportion par rapport à la phase non gonflante.

EXEMPLE 3 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 2M et on procède à un traitement hydrothermal d'un gel silico/germano-métallique (préalablement séché par lyophilisation) à une température de 300°C, pendant 6 heures.
Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,704 Å (I =92) ;
- un plan (020) situé à une distance de 4,548 Å (I =100) ;
- un plan (003) situé à une distance de 3,164 Å (I =74) ;
- un plan (060) situé à une distance de 1,521 Å (I =57).

Sur le diffractogramme des rayons X de cette composition talqueuse, le pic de diffraction correspondant au plan (001) présente un léger épaulement représentatif d'une phase gonflante présente en très faible proportion par rapport à la phase non gonflante.

EXEMPLE 4 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 1,3M et on procède à un traitement hydrothermal d'un gel silico/germano-métallique (préalablement séché par irradiation sous micro-ondes) à une température de 300°C, pendant 6 heures.
Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,715 Å (I =100) ;
- un plan (020) situé à une distance de 4,552 Å (I =9) ;
- un plan (003) situé à une distance de 3,149 Å (I =70) ;
- un plan (060) situé à une distance de 1,526 Å (I =9).

Le diffractogramme des rayons X de cette composition talqueuse présente également un pic de diffraction correspondant à un plan (001) situé à une distance de 18,383Å (pour I =10) représentatif d'une phase gonflante.

EXEMPLE 5 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 1,3M et on procède à un traitement hydrothermal d'un gel silico/germano-métallique (préalablement séché dans une étuve) à une température de 300°C, pendant 6 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 10,088 Å(I =100) ;
- un plan (020) situé à une distance de 4,542 Å (I =50) ;
- un plan (003) situé à une distance de 3,150 Å (I =52) ;
- un plan (060) situé à une distance de 1,523 Å (I =25).

Le diffractogramme des rayons X de cette composition talqueuse présente également un pic de diffraction correspondant à un plan (001) situé à une distance de 18,224Å (pour I =25) représentatif d'une phase gonflante.

EXEMPLE 6 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 4M et on procède à un traitement hydrothermal d'un gel silico/germano-métallique (préalablement séché par irradiation sous micro-ondes) à une température de 300°C, pendant 6 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,699 Å (I =100) ;
- un plan (020) situé à une distance de 4,557 Å (I =9) ;
- un plan (003) situé à une distance de 3,161 Å (I =30) ;
- un plan (060) situé à une distance de 1,522 Å (I =8).

Le diffractogramme des rayons X de cette composition talqueuse présente également un pic de diffraction correspondant à un plan (001) situé à une distance de 20,239A (pour I =5) représentatif d'une phase gonflante.

EXEMPLE 7 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 4M et on procède à un traitement hydrothermal d'un gel silico/germano-métallique (préalablement séché dans une étuve) à une température de 300°C, pendant 6 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,683 Å (I =100) ;
- un plan (020) situé à une distance de 4,566 Å (I =10) ;
- un plan (003) situé à une distance de 3,153 Å (I =35) ;
- un plan (060) situé à une distance de 1,524 Å (I =10).

Le diffractogramme des rayons X de cette composition talqueuse présente également un pic de diffraction correspondant à un plan (001) situé à une distance de 19,840Å (pour I =9) représentatif d'une phase gonflante.

EXEMPLE 8 - Préparation d'une composition comprenant des particules minérales synthétiques selon l'invention

On reproduit le procédé décrit à l'exemple 1 dans lequel on utilise une solution aqueuse d'acétate de sodium trihydratée à une concentration de 1,3M et on procède à un traitement hydrothermal d'un gel silico/germano-métallique (préalablement séché par lyophilisation) à une température de 350°C, pendant 2 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,899 Å (I =50) ;

- un plan (020) situé à une distance de 4,536 Å (I =100) ;
- un plan (003) situé à une distance de 3,155 Å (I =50) ;
- un plan (060) situé à une distance de 1,515 Å (I =65).

EXEMPLE 9 - Préparation d'une composition comprenant des particules minérales synthétiques selon l'invention

On reproduit le procédé décrit à l'exemple 1 dans lequel on utilise une solution aqueuse d'acétate de potassium $CH_3$-COOK à une concentration de 1,3M et on procède à un traitement hydrothermal d'un gel silico/germano-métallique (préalablement séché par lyophilisation) à une température de 300°C, pendant 6 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 10,241 Å (I =100) ;
- un plan (020) situé à une distance de 4,517 Å (I =44) ;
- un plan (003) situé à une distance de 3,315 Å (I =45) ;
- un plan (060) situé à une distance de 1,515 A (I =20).

Le diffractogramme des rayons X de cette composition talqueuse présente également un pic de diffraction correspondant à un plan (001) situé à une distance de 12,562Å (pour I =20) représentatif d'une phase gonflante.

EXEMPLE 10 - Préparation d'une composition comprenant des particules minérales synthétiques selon l'invention

On reproduit le procédé décrit à l'exemple 1 dans lequel on utilise une solution aqueuse de formiate de sodium HCOONa à une concentration de 1,3M et on procède à un traitement hydrothermal d'un gel silico/germano-métallique (préalablement séché par lyophilisation) à une température de 300°C, pendant 6 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 10,029 Å (I = 90) ;
- un plan (020) situé à une distance de 4,520 Å (I =90) ;
- un plan (003) situé à une distance de 3,170 Å (I = 100) ;
- un plan (060) situé à une distance de 1,520 Å (I = 70).

Sur le diffractogramme des rayons X de cette composition talqueuse, le pic de diffraction correspondant au plan (001) présente un épaulement représentatif d'une phase gonflante présente en faible proportion par rapport à la phase non gonflante.

EXEMPLE 11 - Préparation d'une composition comprenant des particules minérales synthétiques selon l'invention

On reproduit le procédé décrit à l'exemple 1 dans lequel on utilise une solution aqueuse de butyrate de sodium $CH_3$-$CH_2$-$CH_2$-COONa à une concentration de 1M et on procède à un traitement hydrothermal d'un gel silico/germano-métallique (préalablement séché par lyophilisation) à une température de 300°C, pendant 6 heures.

Le diffractogramme des rayons X de cette composition talqueuse présente des pics de diffraction correspondant aux pics de diffraction du talc, et en particulier les pics de diffraction caractéristiques suivants :

- un plan (001) situé à une distance de 10,025 Å (I = 100) ;
- un plan (020) situé à une distance de 4,510 Å (I=18) ;
- un plan (003) situé à une distance de 3,168 Å (I = 75) ;
- un plan (060) situé à une distance de 1,519 Å (I = 15).

Sur le diffractogramme des rayons X de cette composition talqueuse, le pic de diffraction correspondant au plan (001) présente un épaulement représentatif d'une phase gonflante présente en faible proportion par rapport à la phase non gonflante.

EXEMPLE COMPARATIF 12

On reproduit le procédé décrit à l'exemple 1 dans lequel on remplace l'acétate de sodium par de l'acétate de magnésium $CH_3$-COOMg.4$H_2O$ à une concentration de 1,3M et on procède à un traitement hydrothermal d'un gel silico/germano-métallique (préalablement séché par lyophilisation) à une température de 300°C, pendant 6 heures.

Le diffractogramme des rayons X de la composition ainsi obtenue ne présente aucun pic de diffraction correspondant aux pics de diffraction du talc.

EXEMPLE COMPARATIF 13

On reproduit le procédé décrit à l'exemple 1 dans lequel on remplace l'acétate de sodium par de l'acétate de calcium $CH_3$-COOCa.$H_2O$ à une concentration de 1,3M et on procède à un traitement hydrothermal d'un gel silico/germano-métallique (préalablement séché par lyophilisation) à une température de 300°C, pendant 6 heures.
Le diffractogramme des rayons X de la composition ainsi obtenue ne présente aucun pic de diffraction correspondant aux pics de diffraction du talc.

EXEMPLE COMPARATIF 14

On reproduit le procédé décrit à l'exemple 1 dans lequel on remplace l'acétate de sodium par de l'hydrogénocarbonate de sodium $NaHCO_3$ (communément appelé « bicarbonate de soude ») à une concentration de 1,3M et on procède à un traitement hydrothermal d'un gel silico/germano-métallique (préalablement séché par lyophilisation) à une température de 300°C, pendant 6 heures.
Le diffractogramme des rayons X de la composition ainsi obtenue ne présente aucun pic de diffraction correspondant aux pics de diffraction du talc.

EXEMPLE COMPARATIF 15

On reproduit le procédé décrit à l'exemple 1 dans lequel on remplace l'acétate de sodium par du carbonate de sodium $Na_2CO_3$ à une concentration de 1,3M et on procède à un traitement hydrothermal d'un gel silico/germano-métallique (préalablement séché par lyophilisation) à une température de 300°C, pendant 6 heures.
Le diffractogramme des rayons X de la composition ainsi obtenue ne présente aucun pic de diffraction correspondant aux pics de diffraction du talc.
Aucune des conditions de traitement hydrothermal décrites dans les exemples comparatifs 12 à 15 ne permet d'obtenir, après un traitement hydrothermal à une température de 300°C pendant 6 heures et en présence d'un sel différent d'un sel carboxylate de formule R-COOM', une composition talqueuse comprenant des particules minérales phyllosilicatées.

EXEMPLE COMPARATIF 16

On reproduit le procédé décrit à l'exemple 1 mais en l'absence de tout sel carboxylate. Un traitement hydrothermal d'un gel silico/germano-métallique (préalablement séché dans une étuve) à une température de 350°C pendant 18 heures est nécessaire pour pouvoir obtenir une composition talqueuse.
Le diffractogramme des rayons X de cette composition talqueuse présente des pics de diffraction correspondant aux pics de diffraction du talc, et en particulier les pics de diffraction caractéristiques suivants :

- un plan (001) situé à une distance de 9,860 Å (I = 100) ;
- un plan (020) situé à une distance de 4,533 Å (I=95) ;
- un plan (003) situé à une distance de 3,149 Å = 81) ;
- un plan (060) situé à une distance de 1,520 Å (I = 73).

En comparaison avec l'exemple 5, en utilisant un même produit de départ (précipitation d'un gel silico/germano-métallique et séchage du gel à l'étuve) même en élevant la température de traitement hydrothermal de 50°C, il faut 18 heures pour obtenir une composition talqueuse, au lieu de 6 heures à 300°C en présence d'acétate de sodium (1,3M).
Les conditions de traitement hydrothermal respectivement décrites dans chacun des exemples 1 à 11 permettent toutes d'obtenir des compositions talqueuses comprenant des particules minérales phyllosilicatées présentant au moins une phase non gonflante. L'analyse par diffraction des rayons X des différentes compositions talqueuses préparées dans les exemples 1 à 11 permet de confirmer la présence d'une phase non gonflante formée d'un empilement de feuillets élémentaires de type phyllosilicate 2/1 et de formule chimique $Si_4M_3O_{10}(OH)_2$ par identification des pics de diffraction caractéristiques du talc.
En outre, il ressort de l'ensemble des exemples précédents, que seul un traitement hydrothermal en présence d'un sel carboxylate de formule R-COOM' (M' désignant un métal choisi dans le groupe formé de Na et K, et R étant choisi parmi H et les groupements alkyle comprenant moins de 10 atomes de carbone) permet d'obtenir une composition talqueuse comprenant des particules minérales phyllosilicatées présentant au moins une phase non gonflante en moins

de 10 heures, tel que dans les conditions décrites dans chacun des exemples 1 à 11.

EXEMPLE 17 - Préparation d'une composition comprenant des particules minérales synthétiques selon l'invention

On prépare tout d'abord un hydrogel précurseur de particules de silicate de zinc de formule $Zn_2SiO_4$. Pour ce faire, on prépare d'une part une solution comprenant 10,6 g de métasilicate de sodium pentahydraté ($Na_2OSiO_2$, 5 $H_2O$) dissous dans 100 ml d'eau distillée, et d'autre part, une solution comprenant 21,95g d'acétate de zinc dihydraté $Zn(CH_3COO)_2$ dissous dans 100 ml d'eau distillée. On ajoute, sous agitation magnétique, la solution d'acétate de zinc à la solution de métasilicate de sodium. Il se forme instantanément un précipité blanc.

La solution obtenue est maintenue sous agitation pendant 5 minutes puis l'hydrogel précurseur de particules de silicate de zinc est récupéré par centrifugation (pendant 5 minutes à 4000 tours/min) et 2 cycles consécutifs de lavage à l'eau distillée et centrifugation.

L'hydrogel obtenu est ajouté à 100 ml d'eau distillée et séché par lyophilisation.

On réalise ensuite un traitement hydrothermal de l'hydrogel précurseur de particules de silicate de zinc précédemment préparé. Pour ce faire, on prépare une solution aqueuse d'acétate de sodium trihydratée $CH_3$-COONa.3$H_2O$ à une concentration de 4 M. On disperse 2 g de gel silico-métallique préalablement séché par lyophilisation dans 27 mL de cette solution d'acétate de sodium. On place la suspension obtenue dans un réacteur en titane clos. On place le réacteur en titane dans un four à la température de 250°C pendant 6 heures.

Après refroidissement jusqu'à la température ambiante, le réacteur est ouvert et la suspension comprenant la poudre blanche est centrifugée. La solution d'acétate de sodium surnageante est récupérée et est susceptible d'être recyclée.

La pâte blanche séparée de la solution d'acétate est lavée 3 fois avec de l'eau déminéralisée puis séchée dans une étuve portée à la température de 130°C pendant 12 h. On obtient après séchage 1,51 g de solide pulvérulent blanc.

Sur la figure 2 est représenté le diffractogramme des rayons X de la composition de silicate de zinc, de formule $Zn_2SiO_4$, ainsi obtenue.

Le diffractogramme des rayons X de cette composition de silicate de zinc représenté en figure 2 présente les pics de diffraction suivants : 7,00 Å (I =13) ; 4,03 Å (I =26) ; 3,48 Å (I =56) ; 2,84 Å (I =100) ; 2,63 Å (I =80) ; 2,31 Å (I =45) ; 1,86 Å (I =30) ; 1,55 Å (I =13) ; 1,42 Å (I =28) ; 1,36 Å (I =13) ; 1,33 Å (I=16).

L'intensité I des pics correspondants donnée est normalisée par rapport au pic le plus intense du diffractogramme, l'intensité du pic le plus intense étant considérée comme égale à 100.

Les pics de diffraction du silicate de zinc $Zn_2SiO_4$ tels que définis dans la fiche JCPDS correspondante (willemite) sont les suivants :

6,97 Å (I =14) ; 4,09 Å (I =16) ; 4,02 Å (I =33) ; 3,48 Å (I =72) ; 2,83 Å (I =100) ; 2,63 Å (I =86) ; 2,31 Å (I =50) ; 1,86 Å (I =40) ; 1,55 Å (I =17) ; 1,42 Å (I =34) ; 1,41 Å (I =24) ; 1,36 Å (I =18); 1,34 Å (I =19).

EXEMPLE COMPARATIF 18

On reproduit le procédé décrit à l'exemple 17 mais en l'absence d'acétate de sodium. Un traitement hydrothermal réalisée dans l'eau (sans sel carboxylate) de l'hydrogel précurseur de particules de silicate de zinc (préalablement séché dans une étuve) à une température de 250°C pendant 6 heures ne suffit pas pour obtenir une composition de silicate de zinc, de formule $Zn_2SiO_4$.

En effet, le diffractogramme des rayons X de la composition obtenue après un tel traitement hydrothermal ne présente pas les pics de diffraction correspondant aux pics de diffraction d'un silicate de zinc.

Ainsi, il ressort des exemples 17 et 18 que seul un traitement hydrothermal d'un hydrogel précurseur de particules minérales synthétiques, telles que des particules de silicate de zinc $Zn_2SiO_4$, en présence d'un sel carboxylate de formule R-COOM' (M' désignant un métal choisi dans le groupe formé de Na et K, et R étant choisi parmi H et les groupements alkyle comprenant moins de 10 atomes de carbone) permet d'obtenir une composition comprenant de telles particules de silicate de zinc au bout d'une durée réduite (6 heures) et à une température de 250°C.

L'invention peut faire l'objet de nombreuses autres applications et de diverses variantes par rapport aux modes de réalisation et exemples décrits ci-dessus. En particulier, ladite composition talqueuse peut comprendre des particules minérales phyllosilicatées dans lesquelles différents métaux sont situés en site octaédriques, tels que dans $(Si_xGe_{1-x})_4M_3O_{11}$, n'$H_2O$, M a pour formule ($Co_{0,5}Ni_{0,5}$) ou encore ($Mg_{0,34}CU_{0,33}Fe_{0,33}$).

## Revendications

1. Procédé de préparation d'une composition comprenant des particules minérales synthétiques silicatées, dans

lequel :

- on prépare un hydrogel précurseur desdites particules minérales synthétiques silicatées,
- on soumet ledit hydrogel à un traitement hydrothermal,

**caractérisé en ce que** :

- on réalise ledit traitement hydrothermal à une température comprise entre 150°C et 600°C,
- on réalise ledit traitement hydrothermal en présence d'au moins un sel carboxylate dans le milieu de traitement, ledit sel carboxylate ayant pour formule R-COOM' dans laquelle :

  o M' désigne un métal choisi dans le groupe formé de Na et K, et
  o R est choisi parmi H et les groupements alkyle comprenant moins de 10 atomes de carbone,

ledit au moins un sel carboxylate de formule R-COOM' étant ajouté audit milieu de traitement de façon à présenter, par rapport au silicium, un rapport molaire R-COOM'/Si compris entre 0,1 et 25.

2. Procédé selon la revendication 1, **caractérisé en ce qu'**on choisit R dans le groupe formé de H-, $CH_3$- et $CH_3$-$CH_2$-$CH_2$-.

3. Procédé selon l'une des revendications 1 ou 2, **caractérisé en ce que** lesdites particules minérales synthétiques sont des particules minérales phyllosilicatées.

4. Procédé selon l'une des revendications 1 à 3, **caractérisé en ce que** ledit hydrogel précurseur desdites particules minérales synthétiques est un gel silico/germano-métallique de formule $(Si_xGe_{1-x})_4M_3O_{11}$, $n'H_2O$ :

   - M désignant au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque y(i) représentant un nombre réel de l'intervalle [0 ;1], et tel que $\sum_{i=1}^{8} y(i) = 1$, et
   - x étant un nombre réel de l'intervalle [0 ;1],
   - n' se référant à un nombre de molécule(s) d'eau associée(s) audit gel silico/germano-métallique.

5. Procédé selon l'une des revendications 1 à 4, **caractérisé en ce que** le(s) sel(s) carboxylate(s) de formule R-COOM' est(sont) ajouté(s) audit milieu de traitement de façon à présenter, par rapport audit hydrogel précurseur desdites particules minérales synthétiques, un rapport molaire R-COOM'/hydrogel compris entre 0,4 et 100.

6. Procédé selon l'une des revendications 1 à 5, **caractérisé en ce qu'**on ajoute le(s) sel(s) carboxylate(s) de formule R-COOM' audit milieu de traitement au début dudit traitement hydrothermal.

7. Procédé selon l'une des revendications 1 à 6, **caractérisé en ce qu'**on ajoute le(s) sel(s) carboxylate(s) de formule R-COOM' audit milieu de traitement de façon à ajuster son pH à une valeur comprise entre 8 et 12.

8. Procédé selon l'une des revendications 1 à 7, **caractérisé en ce qu'**on ajoute le(s) sel(s) carboxylate(s) de formule R-COOM' audit milieu de traitement de façon que la concentration en sel(s) carboxylate(s) de formule R-COOM' dans le milieu de traitement soit comprise entre 0,2 mol/L et 10 mol/L.

9. Procédé selon l'une des revendications 1 à 8, **caractérisé en ce qu'**on réalise ledit traitement hydrothermal à une température comprise entre 200°C et 400°C.

10. Procédé selon l'une des revendications 1 à 9, **caractérisé en ce qu'**on réalise ledit traitement hydrothermal sous pression de vapeur saturante et sous agitation.

11. Procédé selon l'une des revendications 1 à 10, **caractérisé en ce que** consécutivement audit traitement hydrothermal, on sèche lesdites particules minérales synthétiques obtenues par lyophilisation.

12. Procédé selon l'une des revendications 1 à 11, **caractérisé en ce que** consécutivement audit traitement hydrothermal, on réalise un traitement thermique anhydre à une température comprise entre 300°C et 600°C.

**13.** Procédé selon l'une des revendications 3 à 12, **caractérisé en ce que** lesdites particules minérales phyllosilicatées présentent au moins une phase non gonflante formée d'un empilement de feuillets élémentaires de type phyllosilicate 2/1 et de formule chimique $(Si_xGe_{1-x})_4M_3O_{10}(OH)_2$.

**14.** Procédé selon l'une des revendications 1 à 13, **caractérisé en ce que** ladite composition comprenant des particules minérales phyllosilicatées présente, en diffraction des rayons X, des pics de diffraction caractéristiques suivants :

- un plan (001) situé à une distance comprise entre 9,50 Å et 10,25 Å ;
- un plan (020) situé à une distance comprise entre 4,50 Å et 4,61 Å ;
- un plan (003) situé à une distance comprise entre 3,10 Å et 3,20 Å ;
- un plan (060) situé à une distance comprise entre 1,50 Å et 1,55 Å.

## Patentansprüche

**1.** Verfahren zur Herstellung einer Zusammensetzung, die synthetische silikatische anorganische Teilchen umfasst, wobei:

- ein Vorläufer-Hydrogel der synthetischen silikatischen anorganischen Teilchen hergestellt wird,
- das Hydrogel einer hydrothermalen Behandlung unterzogen wird,

**dadurch gekennzeichnet, dass**:

- die hydrothermale Behandlung bei einer Temperatur im Bereich zwischen 150 °C und 600 °C durchgeführt wird,
- die hydrothermale Behandlung in Gegenwart von mindestens einem Carboxylatsalz in dem Behandlungsmedium durchgeführt wird, wobei das Carboxylatsalz R-COOM' zur Formel besitzt, bei der:

  o M' ein Metall bezeichnet, das aus der Gruppe ausgewählt ist, die von Na und K gebildet wird, und
  o R aus H und Alkylgruppen ausgewählt ist, die weniger als 10 Kohlenstoffatome umfassen,

wobei das mindestens eine Carboxylatsalz der Formel R-COOM' dem Behandlungsmedium derart zugesetzt wird, dass es im Verhältnis zu Silizium ein R-COOM'/Si-Molverhältnis im Bereich zwischen 0,1 und 25 aufweist.

**2.** Verfahren nach Anspruch 1, **dadurch gekennzeichnet, dass** R aus der Gruppe ausgewählt wird, die von H-, $CH_3$- und $CH_3$-$CH_2$-$CH_2$- gebildet wird.

**3.** Verfahren nach einem der Ansprüche 1 oder 2, **dadurch gekennzeichnet, dass** die synthetischen anorganischen Teilchen phyllosilikatische anorganische Teilchen sind.

**4.** Verfahren nach einem der Ansprüche 1 bis 3, **dadurch gekennzeichnet, dass** das Vorläufer-Hydrogel der synthetischen anorganischen Teilchen ein Silizium/Germanium-Metalle enthaltendes Gel der Formel $(Si_XGe_{1-x})_4M_3O_{11}$, n' $H_2O$ ist:

- wobei M mindestens ein zweiwertiges Metall bezeichnet, das $Mg_{y(1)}CO_{y(2)}Zn_{y(3)}CU_{y(4)}Mn_{y(5)}Fe_{y(6)}Ni_{y(7)}Cr_{y(8)}$ zur Formel besitzt; wobei jedes *y(i)* für eine reelle

  Zahl des Intervalls [0;1] steht, und so, dass $\sum_{i=1}^{8} y(i) = 1$, und
- x eine reelle Zahl des Intervalls [0;1] ist,
- n' sich auf eine Anzahl von Wassermolekülen bezieht, die mit dem Silizium/Germanium-Metalle enthaltenden Gel assoziiert sind.

**5.** Verfahren nach einem der Ansprüche 1 bis 4, **dadurch gekennzeichnet, dass** das/die Carboxylatsalz(e) der Formel R-COOM' dem Behandlungsmedium derart zugesetzt wird/werden, dass es im Verhältnis zum Vorläufer-Hydrogel der synthetischen anorganischen Teilchen ein R-COOM'/Hydrogel-Molverhältnis im Bereich zwischen 0,4 und 100 aufweist.

6. Verfahren nach einem der Ansprüche 1 bis 5, **dadurch gekennzeichnet, dass** das/die Carboxylatsalz (e) der Formel R-COOM' dem Behandlungsmedium zu Beginn der hydrothermalen Behandlung zugesetzt werden.

7. Verfahren nach einem der Ansprüche 1 bis 6, **dadurch gekennzeichnet, dass** das/die Carboxylatsalz(e) der Formel R-COOM' dem Behandlungsmedium derart zugesetzt werden, dass sein pH-Wert auf einen Wert im Bereich zwischen 8 und 12 eingestellt wird.

8. Verfahren nach einem der Ansprüche 1 bis 7, **dadurch gekennzeichnet, dass** das/die Carboxylatsalz(e) der Formel R-COOM' dem Behandlungsmedium derart zugesetzt werden, dass die Konzentration an Carboxylatsalz(en) der Formel R-COOM' in dem Behandlungsmedium im Bereich zwischen 0,2 mol/L und 10 mol/L liegt.

9. Verfahren nach einem der Ansprüche 1 bis 8, **dadurch gekennzeichnet, dass** die hydrothermale Behandlung bei einer Temperatur im Bereich zwischen 200 °C und 400 °C durchgeführt wird.

10. Verfahren nach einem der Ansprüche 1 bis 9, **dadurch gekennzeichnet, dass** die hydrothermale Behandlung unter Sättigungsdampfdruck und unter Rühren durchgeführt wird.

11. Verfahren nach einem der Ansprüche 1 bis 10, **dadurch gekennzeichnet, dass** anschließend an die hydrothermale Behandlung die gewonnenen synthetischen anorganischen Teilchen durch Gefriertrocknung getrocknet werden.

12. Verfahren nach einem der Ansprüche 1 bis 11, **dadurch gekennzeichnet, dass** anschließend an die hydrothermale Behandlung eine wasserfreie thermische Behandlung bei einer Temperatur im Bereich zwischen 300 °C und 600 °C durchgeführt wird.

13. Verfahren nach einem der Ansprüche 3 bis 12, **dadurch gekennzeichnet, dass** die phyllosilikatischen anorganischen Teilchen mindestens eine nichtquellbare Phase aufweisen, die von einer Schichtung aus elementaren Plättchen des Typs Phyllosilikat 2/1 und der chemischen Formel $(Si_xGe_{1-x})_4M_3O_{10}(OH)_2$ gebildet wird.

14. Verfahren nach einem der Ansprüche 1 bis 13, **dadurch gekennzeichnet, dass** die Zusammensetzung, die phyllosilikatische anorganische Teilchen umfasst, in der Röntgenbeugung folgende charakteristische Beugungspeaks aufweist:

   - eine Ebene (001), die in einem Abstand im Bereich zwischen 9,50 Å und 10,25 Å liegt;
   - eine Ebene (020), die in einem Abstand im Bereich zwischen 4,50 Å und 4,61 Å liegt;
   - eine Ebene (003), die in einem Abstand im Bereich zwischen 3,10 Å und 3,20 Å liegt;
   - eine Ebene (060), die in einem Abstand im Bereich zwischen 1,50 Å und 1,55 Å liegt.

## Claims

1. Method for preparing a composition including synthetic mineral silicate particles, wherein:

   - a hydrogel that is a precursor of said synthetic mineral silicate particles is prepared,
   - said hydrogel is subjected to a hydrothermal treatment,

   **characterised in that**:

   - said hydrothermal treatment is carried out at a temperature between 150°C and 600°C,
   - said hydrothermal treatment is carried out in the presence of at least one carboxylate salt in the treatment medium, said carboxylate salt having the formula R-COOM' wherein:

     o M' denotes a metal selected from the group consisting of Na and K, and
     o R is selected from H and the alkyl groups comprising less than 10 carbon atoms,

   said at least one carboxylate salt having the formula R-COOM' being added to said treatment medium in such a way as to have, in relation to the silicon, a molar ratio R-COOM'/Si between 0.1 and 25.

2. Method according to claim 1, **characterised in that** R is selected from the group consisting of H-, $CH_{3-}$ and $CH_{3-}$

$CH_2$-$CH_2$-.

3. Method according to one of claims 1 or 2, **characterised in that** said synthetic mineral particles are phyllosilicate mineral particles.

4. Method according to one of claims 1 to 3, **characterised in that** said precursor hydrogel of said synthetic mineral particles is a silico/germano-metal gel having the formula $(Si_xGe_{1-x})_4M_3O_{11}$, n'$H_2O$:

   - M denotes at least one divalent metal having the formula $Mgy_{(1)}Co_{y(2)}Zn_{y(3)}Cu_{y(4)}Mn_{y(5)}Fe_{y(6)}Ni_{y(7)}Cr_{y(8)}$ ; with each y(i) representing a real number of the interval [0;1], and such that $\sum_{i=1}^{8} y(i) = 1$ and ,
   - x is a real number of the interval [0;1],
   - n' refers to a number of water molecule(s) associated with said silico/germano-metal gel.

5. Method according to one of claims 1 to 4, **characterised in that** the carboxylate salt(s) having the formula R-COOM' are added to said treatment medium in such a way as to have, with respect to said precursor hydrogel of said synthetic mineral particles, a molar ratio R-COOM'/hydrogel between 0.4 and 100.

6. Method according to one of claims 1 to 5, **characterised in that** the carboxylate salt(s) having the formula R-COOM' are added to said treatment medium at the beginning of said hydrothermal treatment.

7. Method according to one of claims 1 to 6, **characterised in that** the carboxylate salt(s) having the formula R-COOM' are added to said treatment medium in such a way as to adjust its pH to a value between 8 and 12.

8. Method according to one of claims 1 to 7, **characterised in that** the carboxylate salt(s) having the formula R-COOM' are added to said treatment medium in such a way that the concentration in carboxylate salt(s) having the formula R-COOM' in the treatment medium is between 0.2 mol/L and 10 mol/L.

9. Method according to one of claims 1 to 8, **characterised in that** said hydrothermal treatment is carried out at a temperature between 200°C and 400°C.

10. Method according to one of claims 1 to 9, **characterised in that** said hydrothermal treatment is carried out under saturation vapour pressure and under stirring.

11. Method according to one of claims 1 to 10, **characterised in that** consecutively to said hydrothermal treatment, said synthetic mineral particles obtained by freeze-drying are dried.

12. Method according to one of claims 1 to 11, **characterised in that** consecutively to said hydrothermal treatment, an anhydrous heat treatment is carried out at a temperature between 300°C and 600°C.

13. Method according to one of claims 3 to 12, **characterised in that** said phyllosilicate mineral particles have at least one non-swelling phase formed from a stack of basic sheets of the phyllosilicate 2/1 type and having the chemical formula $(Si_xGe_{1-x})_4M_3O_{10}(OH)_2$.

14. Method according to one of claims 1 to 13, **characterised in that** said composition comprising phyllosilicate mineral particles has, by X-ray diffraction, the following characteristic diffraction peaks:

   - a plane (001) located at a distance between 9,50 Å and 10.25 Å;
   - a plane (020) located at a distance between 4,50 Å and 4.61 Å;
   - a plane (003) located at a distance between 3,10 Å and 3.20 A;
   - a plane (060) located at a distance between 1.50 Å and 1.55 Å.

Figure 1

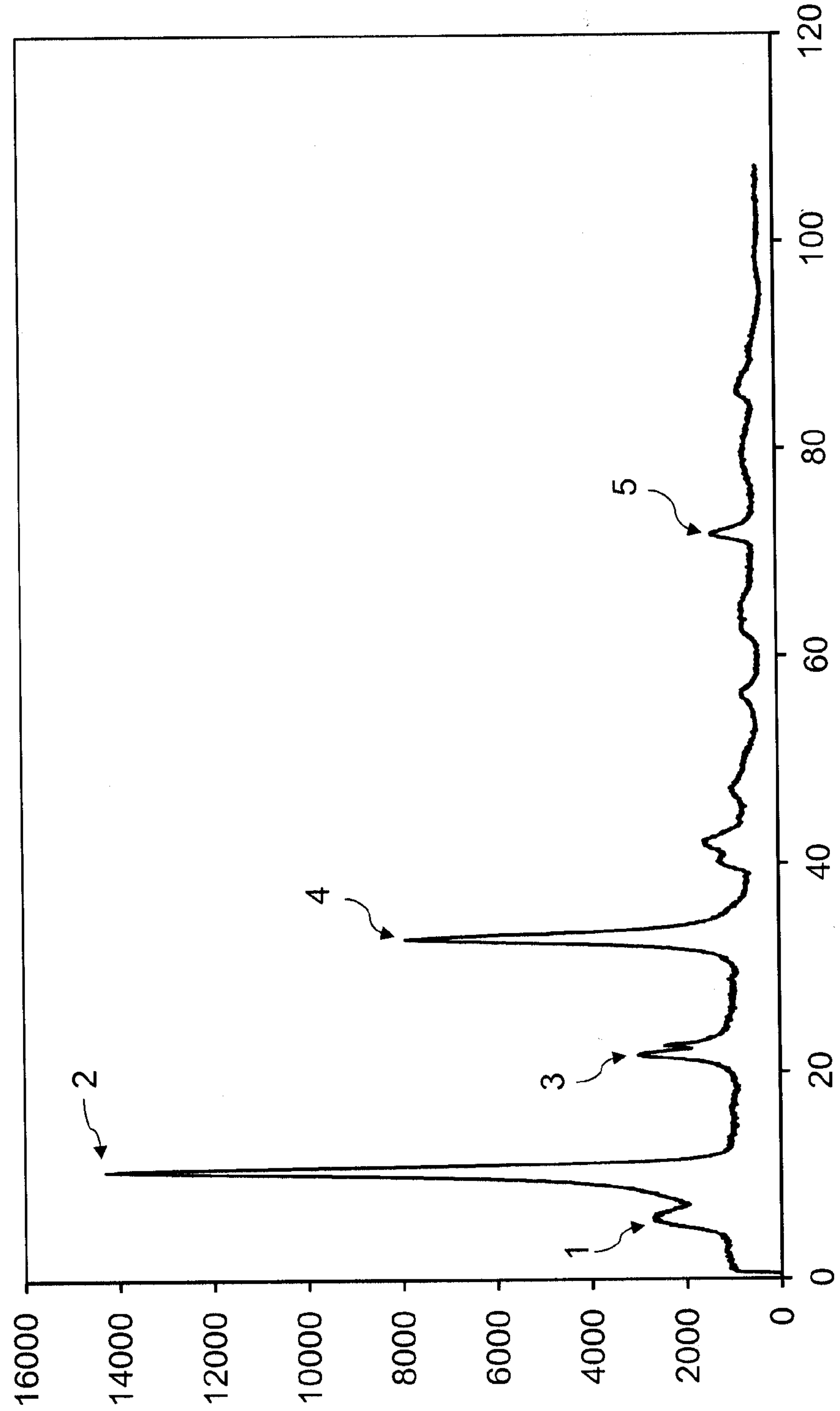
16000
14000
12000
10000
8000
6000
4000
2000
0
0
20
40
60
80
100
120
1
2
3
4
5

Figure 2

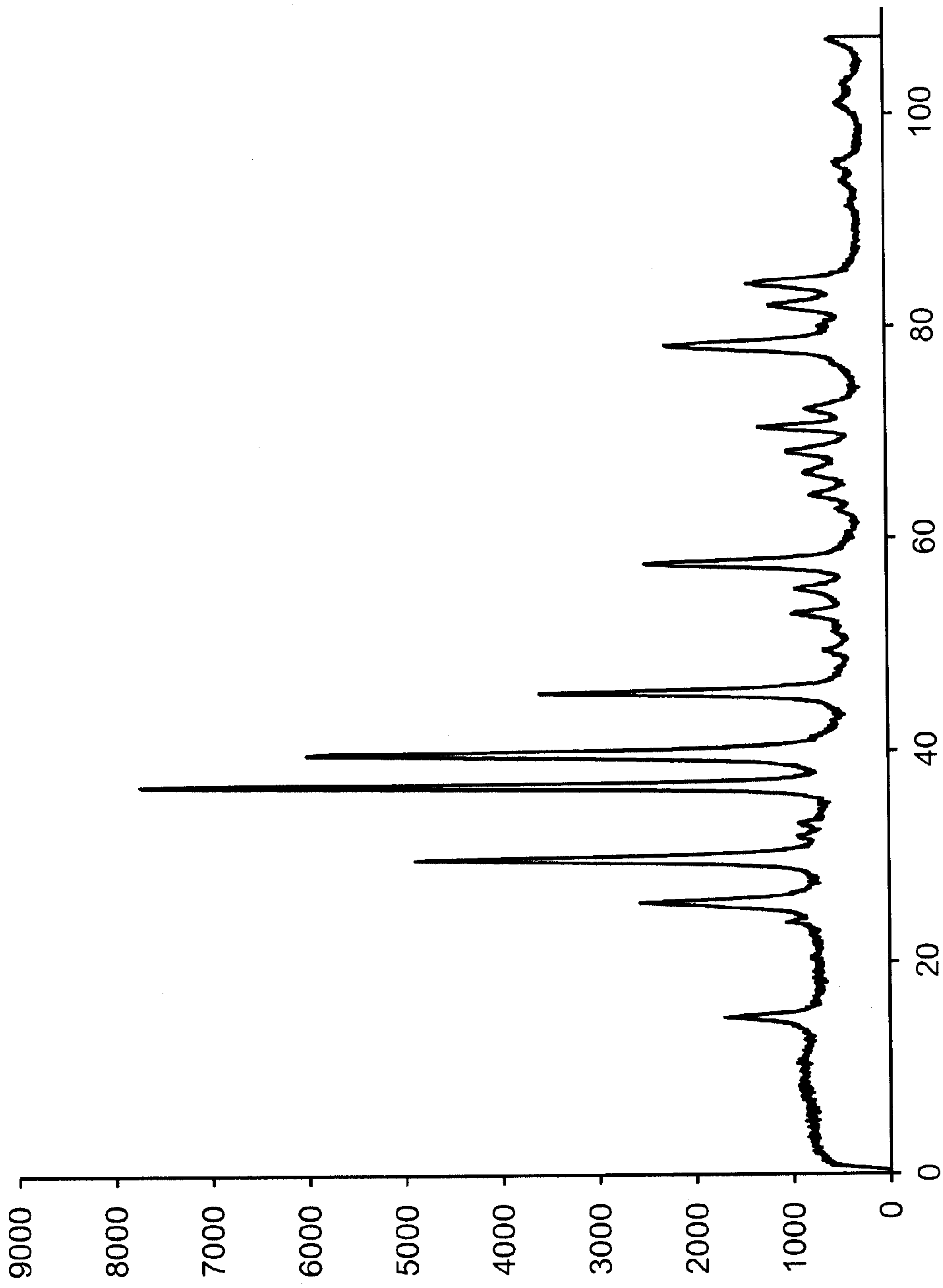

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008009799 A
- US 20010042704 A